# EUROPÄISCHE PATENTSCHRIFT

(11) **EP 1 527 994 B1**
(45) Veröffentlichungstag und Bekanntmachung des Hinweises auf die Patenterteilung: **16.01.2008**
(21) Anmeldenummer: 04009312.2
(22) Anmeldetag: 20.04.2004
(51) Int. Cl.: B64D 13/06, F25B 9/00

(54) **Klimatisierungssystem und Verfahren zur Aufbereitung von Luft zur Klimatisierung eines Raumes**
Environmental control system and method of conditioning air for the climatisation of a space
Système de climatisation et procédé de conditionnement d'air pour la climatisation d'un espace

(30) Priorität: 29.10.2003 DE 10350541
(43) Veröffentlichungstag der Anmeldung: 04.05.2005
(73) Patentinhaber: Liebherr-Aerospace Lindenberg GmbH, 88161 Lindenberg/Allgäu (DE)
(72) Erfinder: Brutscher, Norbert, 88161 Lindenberg (DE); Haas, Joachim, 88239 Wangen (DE)
(74) Vertreter: Herrmann, Uwe

(56) Entgegenhaltungen:
- EP-A- 0 888 966
- DE-A- 10 201 426
- US-A- 4 487 034
- US-A- 4 523 517
- US-A1- 2002 113 167

## Beschreibung

Die Erfindung betrifft ein Klimatisierungssystem, insbesondere ein Klimatisierungssystem zur Klimatisierung einer Passagierkabine eines Flugzeuges nach dem Oberbegriff des Patentanspruchs 1. Die Erfindung betrifft ferner ein Verfahren zur Aufbereitung von Luft zur Klimatisierung eines Raumes, insbesondere zur Klimatisierung einer Passagierkabine eines Flugzeuges.

Klimatisierungssysteme für Flugzeuge sind in zahlreichen unterschiedlichen Ausführungsformen bekannt. Sie dienen insbesondere dem Heizen und dem Kühlen der Kabine, der Kabinenbedruckung sowie der Frischluftversorgung. Von Bedeutung ist, dass das Klimatisierungssystem über eine möglichst geringe Baugröße und Gewicht verfügt, was insbesondere im Flugzeugbau von großem Interesse ist. Vorbekannte Klimatisierungssysteme weisen in der Regel eine einen Verdichter sowie eine Turbine umfassende Welleneinrichtung auf, die zusätzlich mit einem in einem Stauluftkanal angeordneten Gebläse versehen sein kann. In dem Stauluftkanal befinden sich bei vorbekannten Systemen ein oder mehrere Wärmetauscher, die zur Kühlung von den Triebwerken oder Hilfsaggregaten abgezapfter Druckluft dienen. Bei vorbekannten Systemen wird die Druckluft zunächst in einem ersten Wärmetauscher im Stauluftkanal gekühlt, sodann in dem Verdichter der Welleneinrichtung komprimiert, in einem zweiten, im Stauluftkanal angeordneten Wärmetauscher wieder abgekühlt und sodann einem Wasserabscheidekreislauf zugeführt. Anschließend strömt die auf diese Weise entfeuchtete Luft durch die Turbine der Welleneinrichtung und wird sodann einer Mischkammer oder der Passagierkabine zugeführt.

Es sind Klimatisierungssysteme bekannt, bei denen aus Redundanzgründen zwei der genannten Systeme vorgesehen sind. Es sind ferner Ausführungsformen bekannt, bei denen nicht sämtliche Komponenten doppelt vorhanden sind, sondern nur die, die eine verhältnismäßig große Auswahlwahrscheinlichkeit haben. Ein derartiges Klimatisierungssystem, bei dem die Welleneinrichtungen zweifach vorhanden sind, die Stauluftwärmetauscher sowie der Wasserabscheidekreislauf jedoch nur einfach, ist aus der EP 0 891 279 B1 bekannt.

Eine Weiterbildung des aus dieser Druckschrift bekannten Systems ist Gegenstand der DE 102 01 426. Das in dieser Schrift offenbarte Klimatisierungssystem weist wenigstens einen in einem Stauluftkanal angeordneten Wärmetauscher zur Kühlung von Druckluft auf. Der Wärmetauscher umfasst wenigstens eine erste und eine davon druckluftseitig getrennte zweite Wärmetauschereinheit, von denen jeweils eine druckluftseitig mit jeweils einer der Welleneinrichtungen in Verbindung steht. Die Welleneinrichtungen weisen Verdichter auf, die auslassseitig mit dem druckluftseitigen Einlass der druckluftseitig getrennten Wärmetauschereinheiten in Verbindung stehen. Die Wärmetauschereinheiten verfügen über jeweils eine eigene Druckluftversorgung.

Für die wenigstens zwei Wärmetauschereinheiten sind ein gemeinsamer Staulufteinlasskanal und strömungsmechanisch voneinander getrennte Stauluftauslasskanäle vorgesehen.

Durch das in der DE 102 01 426 A1 offenbarte Klimatisierungssystem wird eine besonders kompakte und gleichzeitig zuverlässige, redundante und kostengünstige Anordnung erreicht.

Bei dem zuvor beschriebenen Klimatisierungssystem wird die dem System zugeführte Druckluft den Triebwerken entzogen. Das Abzapfen der aufzubereitenden Frischluft direkt aus dem Triebwerk ist jedoch insofern problematisch, als mit dem Abzapfen der Luft aus dem Triebwerk in der Regel eine unerwünschte Verminderung der Triebwerksleistung verbunden ist.

Aus US 4 523 517 A4 ist ein Klimatisierungssystem nach dem Oberbegriff von Anspruch 1 bekannt. Dabei ist vorgesehen, dass die Verdichter einlassseitig mit Stau- oder Umgebungsluft beaufschlagt werden und dass ein oder mehrere Motoren vorgesehen sind, mittels derer die Verdichter antreibbar sind. Gemäß der Erfindung wird den Verdichtern somit keine von den Triebwerken abgezapfte Luft, sondern lediglich Stau- bzw. Umgebungsluft zugeführt, die in den Verdichtern komprimiert und sodann der jeweiligen Wärmetauschereinheit zugeführt wird. Dabei sind ein oder mehrere Motoren vorgesehen, mittels derer die Verdichter antreibbar sind. Die Motoren sind erforderlich, um die von einer Entspannungsstufe bereitgestellte Leistung der Verdichter zu ergänzen oder im Falle des Bypass der Entspannungsstufe den Betrieb der Verdichter sicherzustellen.

Ein solches Klimatisierungssystem weist den Vorteil auf, dass es ohne jegliche Zapfluft aus den Triebwerken auskommt. Dem System wird lediglich Stau- oder Umgebungsluft zugeführt und zwar sowohl als aufzubereitende Luft zur Klimatisierung des Raumes als auch als Kühlmedium für die aufzubereitende Luft.

Bei diesem System ist jedoch der Wasserabscheider im Niederdruckbereich hinter der Turbine angeordnet, was den Nachteil mit sich bringt, dass die Turbinenauslaßtemperatur über 0 °C liegen muß. Daraus ergibt sich der Nachteil, dass zur Gewährleistung derselben Kühlleistung ein größerer Massenstrom bewältigt werden muß, der wiederum dazu führt, dass die Turbine vergleichsweise groß baut, was unerwünscht ist. Zudem muss die im Bodenbetrieb erforderliche Kühlung durch ein separates System bereitgestellt werden, während der Verdichter lediglich eine Belüftung der Kabine ermöglicht, da die feuchte Luft am Boden die Turbine sonst vereisen ließe. So können die Komponenten des Systems nur ungenügend ausgenutzt werden.

Aufgabe der vorliegenden Erfindung ist es daher, ein Klimatisierungssystem nach dem Oberbegriff von Anspruch 1 dahingegend weiterzuentwickeln, dass die Nachteile des Standes der Technik vermieden werden und alle Systemkomponenten optimal ausgenutzt werden können.

Diese Aufgabe wird durch ein Klimatisierungssystem mit den Merkmalen gemäß Patentanspruch 1 sowie mit einem Verfahren zur Aufbereitung von Luft zur Klimatisierung eines Raumes mit den Merkmalen des Patentanspruchs 22 gelöst. Dabei ist der Turbine erfindungegemäß ein Wasserabscheider vorgeschaltet, wobei die Turbinen-Bypassleitung sowohl den Wasserabscheider als auch die Turbine druckluftseitig umgeht.

Vorteilhafte Ausgestaltungen der Erfindung sind Gegenstand der Unteransprüche.

In weiterer Ausgestaltung der Erfindung ist ein Klimatisierungssystem mit wenigstens einem in einem Stauluftkanal angeordneten Wärmetauscher zur Kühlung von Druckluft sowie mit wenigstens einer ersten und einer zweiten Welleneinrichtung, wobei der Wärmetauscher wenigstens eine erste und eine davon druckluftseitig getrennte zweite Wärmetauschereinheit umfasst, die in dem gemeinsamen Stauluftkanal angeordnet sind und von denen jeweils eine druckluftseitig mit jeweils einer der Welleneinrichtungen in Verbindung steht, wobei die Welleneinrichtungen Verdichter aufweisen, die auslassseitig jeweils mit dem druckluftseitigen Einlass der Wärmetauschereinheiten in Verbindung stehen, wobei die Verdichter einlassseitig mit Stau- oder Umgebungsluft beaufschlagt werden und dass ein oder mehrere Motoren vorgesehen sind, mittels derer die Verdichter antreibbar sind.

In weiterer Ausgestaltung der Erfindung ist vorgesehen, dass die Wärmetauschereinheiten eine bauliche Einheit bilden. Sie sind in dem gemeinsamen Stauluftkanal angeordnet.

Es kann vorgesehen sein, dass für die wenigstens zwei Wärmetauschereinheiten ein gemeinsamer Staulufteinlasskanal vorgesehen ist, wobei zum Zwecke der Veränderung des Stauluftstromes und damit der Kühlleistung der Wärmetauschereinheiten eine in ihrer Position verstellbare Stauluftkanaleinlassklappe vorgesehen sein kann.

In weiterer Ausgestaltung der Erfindung ist für die wenigstens zwei Wärmetauschereinheiten ein gemeinsamer Stauluftauslasskanal vorgesehen. In diesem können ein, zwei oder mehr motorisch angetriebene Gebläse vorgesehen sein. Diese sorgen im Bodenbetrieb für die Aufrechterhaltung einer Durchströmung des Stauluftkanals und stellen die Kühlleistung der im Stauluftkanal angeordneten Wärmetauschereinheiten sicher. Ebenso ist es möglich, für die wenigstens zwei Wärmetauschereinheiten getrennte Stauluftauslasskanäle vorzusehen. Dabei können in jedem der voneinander getrennten und unmittelbar an der Auslassseite der Wärmetauschereinheiten beginnenden Stauluftauslasskanäle ein oder vorzugsweise zwei oder mehr motorisch angetriebene Gebläse angeordnet sein.

Die Gebläse können in strömungsmechanisch voneinander getrennten Teilbereichen des Stauluftauslasskanals angeordnet sein. Diese strömungsmechanische Trennung des Stauluftauslasskanals bezieht sich vorzugsweise nur auf einen Teilbereich des Stauluftauslasskanals und vorteilhaft nicht auf den sich unmittelbar an die Wärmetauschereinheiten anschließenden Bereich. Um zu verhindern, dass beim Ausfall eines der Gebläse das in Betrieb befindliche Gebläse Luft über das stehende Gebläse und nicht durch die Wärmetauschereinheiten fördert, kann vorgesehen sein, dass stromabwärts der Gebläse Rückschlagventile vorgesehen sind, die verhindern, dass in den von den Gebläsen versorgten Teilbereichen des Stauluftauslasskanals eine Rückströmung erfolgt.

Um die Durchlässigkeit des Stauluftkanals zu erhöhen kann vorgesehen sein, dass ein oder mehrere ebenfalls mit Rückschlagventilen vorgesehene Gebläsebypässe im Stauluftkanal angeordnet sind. Wenigstens ein Bypass kann beispielsweise zwischen den von den jeweiligen Gebläsen versorgten Teilbereichen des Stauluftauslasskanals angeordnet sein.

In weiterer Ausgestaltung der Erfindung ist vorgesehen, dass es sich bei den Verdichtern um mehrstufige Verdichter handelt, von denen die erste Stufe einlassseitig mit Stau- oder Umgebungsluft beaufschlagt wird und die letzte Stufe auslassseitig mit dem druckluftseitigen Einlass der Wärmetauschereinheiten in Verbindung steht. Beispielsweise sind zwei- oder auch mehrstufige Verdichter einsetzbar.

Die Welleneinrichtungen können wenigstens einen Verdichter, eine Turbine als Entspannungsstufe sowie einen Motor aufweisen. Der Motor zum Antrieb der Verdichter ist somit vorzugsweise Bestandteil einer Welleneinrichtung.

In weiterer Ausgestaltung der Erfindung steht jede der Welleneinrichtungen mit jeweils einem Wasserabscheidekreislauf in Verbindung. Die Wasserabscheidekreisläufe dienen der Entfeuchtung der der Entspannungsstufe zugeführten Luft. Grundsätzlich kann auch vorgesehen sein, dass für die mehreren Welleneinrichtungen ein gemeinsamer Wasserabscheidekreislauf vorgesehen ist.

Insbesondere bei großen Flughöhen kann es erforderlich sein, die aus der Wärmetauschereinheit druckluftseitig strömende Luft nicht durch den Wasserabscheidekreislauf und die Entspannungsstufe zu führen, um eine ausreichende Durchlässigkeit des Systems zu gewährleisten und sicherzustellen, dass die Verdichterleistung ausreicht, um eine ausreichende Kabinenbedruckung zu gewährleisten. In diesem Fall wird die Kühlleistung nicht durch die Entspannungsstufe, sondern im wesentlichen durch die Wärmetauschereinheit erbracht. Ein Bypass des Wasserabscheidekreislaufes ist möglich, da die Luft in größeren Flughöhen verhältnismäßig trocken ist und eine Wasserabscheidung daher nicht zwingend erforderlich ist. Um insbesondere in diesem Fall eine hinreichende Kühlung der Kabinenluft sicherzustellen, kann zusätzlich vorgesehen sein, dass ein Kabinenluftkreislauf betrieben wird, in dem Mittel zur Abfuhr von Wärme aus der im Kreislauf geführten Luft angeordnet sind. Die Mittel zur Abfuhr von Wärme können beliebig ausgeführt sein. Sie können einen Wärmetauscher umfassen oder auch einen Verdampfer, durch die geeignete Kühlmittel geführt werden.

Dabei ist es besonders vorteilhaft, wenn der Wärmetauscher eine weitere, mit Stau- oder Umgebungsluft beaufschlagbare Wärmetauschereinheit aufweist, die mit der ersten sowie der zweiten Wärmetauschereinheit druckluftseitig nicht in Verbindung steht. Diese Wärmetauschereinheit kann als Kondensor ausgeführt sein und mit dem Verdampfer in Verbindung stehen. Der Verdampfer sowie der Kondensor können Bestandteile eines geschlossenen Kühlmittelkreislaufes sein.

In weiterer Ausgestaltung der Erfindung sind eine oder mehrere sich von der Auslassseite der Wärmetauschereinheiten zu der Auslassseite der Entspannungsstufen erstreckende Bypassleitungen vorgesehen, die jeweils mittels eines darin angeordneten Ventils absperrbar sind. Die Bypassleitungen dienen dazu, bei großen Flughöhen die Durchlässigkeit des Systems zu erhöhen. In diesem Betriebsmodus kann es erforderlich sein, einen Bypass insbesondere des Wasserabscheidekreislaufes und/oder der Turbine vorzunehmen, um den Druckverlust der Verdichterauslassluft so gering wie möglich zu halten. In diesem Fall wird die in den Wärmetauschereinheiten gekühlte Luft mittels des Bypass vorzugsweise stromabwärts der Turbine, vorzugsweise stromabwärts des Kondensors des Wasserabscheidekreislaufes eingespeist und sodann einer Mischkammer oder der Passagierkabine zugeführt.

In weiterer Ausgestaltung der Erfindung steht die Turbine einlassseitig über eine mit einem Ventil verschließbare Leitung mit der Kabine oder einer dieser vorgeschalteten Mischkammer und auslassseitig über eine mit einem Ventil verschließbare Leitung mit der Umgebung in Verbindung, wobei Mittel vorgesehen sind, durch die die Turbine von den die in dem Kompressor verdichtete Luft führenden Leitungen absperrbar ist. Die Mittel können als Ventile ausgeführt sein, die in der die Turbine mit dem Wasserabscheidekreislauf verbindenden Einlassleitung sowie in der die Turbine mit der Mischkammer oder der Kabine verbindenden Auslassleitung angeordnet sind.

Die vorliegende Erfindung betrifft ferner ein Verfahren zur Aufbereitung von Luft zur Klimatisierung eines Raumes, insbesondere zur Klimatisierung einer Passagierkabine eines Flugzeuges gemäß Patentanspruch 22. In einem ersten Betriebsmodus wird die in den Wärmetauschereinheiten gekühlte Luft einem Wasserabscheidekreislauf zugeführt, in einer Entspannungsstufe entspannt und in den zu klimatisierenden Raum oder eine vorgeschaltete Mischkammer geführt. Insbesondere bei großen Flughöhen ist in einem zweiten Betriebsmodus vorgesehen, dass die in den Wärmetauschereinheiten gekühlte Luft unter Umgehung des Wasserabscheidekreislaufes und/oder der Entspannungsstufe unmittelbar in den zu klimatisierenden Raum oder eine vorgeschaltete Mischkammer geführt wird.

Wir oben ausgeführt, ist der erste Betriebsmodus vorzugsweise im Bodenbetrieb oder in geringeren Flughöhen und der zweite Betriebsmodus vorzugsweise in größeren Flughöhen anzuwenden.

Die Kühlleistung zur Kühlung der den Wärmetauschereinheiten zugeführten Luft mittels Stau- oder Umgebungsluft kann durch die Änderung der Position einer Stauluftkanaleinlassklappe und/oder durch die Änderung des Betriebes von im Stauluftauslasskanal angeordneten Gebläse gesteuert oder geregelt werden.

Zur Erhöhung der Kühlleistung kann vorgesehen sein, dass die Kabinenluft zumindest teilweise im Kreislauf geführt wird und diese dabei einem Kühlprozess unterzogen wird. Dabei ist in einer vorteilhaften Ausgestaltung des Verfahrens vorgesehen, dass die Kühlung mittels eines Kühlmediums erfolgt, das im Kreislauf geführt wird, wobei dem Kühlmedium in einer in dem Stauluftkanal des Klimatisierungssystems angeordneten Wärmetauschereinheit Wärme entzogen wird. Dabei kann vorgesehen sein, dass die Temperatur- und Druckverhältnisse derart gewählt werden, dass das Kühlmedium in der Wärmetauschereinheit kondensiert. Um den Energiegehalt der Kabinenluft zu nutzen, kann in weiterer Ausgestaltung der Erfindung vorgesehen sein, dass in dem zweiten Betriebsmodus Kabinenluft über die Turbine entspannt und sodann der Umgebungsluft zugeführt wird.

Die Erfindung betrifft ferner ein Klimatisierungssystem, insbesondere ein Klimatisierungssystem zur Klimatisierung einer Passagierkabine eines Flugzeugs mit wenigstens einem in einem Stauluftkanal angeordneten Wärmetauscher mit wenigstens einer mit dem Wärmetauscher druckluftseitig in Verbindung stehenden Welleneinrichtung mit wenigstens einem einlassseitig mit Stau- oder Umgebungsluft beaufschlagten Verdichter und wenigstens einer Turbine, mit wenigstens einem Motor zum Antrieb des Verdichters, mit einer Turbinen-Bypassleitung zur druckluftseitigen Umgehung der Turbine sowie mit wenigstens einer Steuereinrichtung, mittels derer das Klimatisierungssystem in einem ersten Betriebsmodus betreibbar ist, in dem die verdichtete Luft in der Turbine entspannt wird, und in einem zweiten Betriebsmodus betreibbar ist, in dem die verdichtete Luft überwiegend oder vollständig durch die Turbinen-Bypassleitung geführt wird, wobei die Steuereinrichtung mit dem Motor in Verbindung steht und derart ausgeführt ist, dass der Motor in dem ersten Betriebsmodus derart betrieben wird, dass die Motorleistung für Kühlzwecke sowie zur Bedruckung verwendet wird, und in dem zweiten Betriebsmodus derart betrieben wird, dass die Motorleistung zur Verdichtung der Stau- oder Umgebungsluft verwendet wird.

Dabei kann vorgesehen sein, dass der erste Betriebsmodus im Bodenbetrieb oder bei geringen Flughöhen und der zweite Betriebsmodus bei demgegenüber größeren Flughöhen angewandt wird.

In bevorzugter Ausgestaltung der Erfindung ist das Klimatisierungssystem nach einem der Ansprüche 1 bis 21 ausgeführt.

Ein derartiges Klimatisierungssystem hat den Vorteil, dass die verfügbare Motorleistung des Verdichtermotors insbesondere im Bodenbetrieb oder bei geringeren Flughöhen nicht weitgehend ungenutzt ist, sondern überwiegend bzw. ausschließlich zur Kühlung und zur Bedruckung der Kabine, d.h. zur Verdichtung der Stau- bzw. Umgebungsluft verwendet wird. Der Motor kann beispielsweise im Bereich von 80 - 100 % seiner Maximalleistung betrieben werden. Die Kühlung wird durch die Entspannung der entsprechend verdichteten Luft in der Turbine der Welleneinrichtung erreicht. In größeren Flughöhen wird die verfügbare Motorleistung im wesentlichen oder ausschließlich zur Verdichtung der Umgebungsluft auf das Kabinendruckniveau, d.h. zur Kabinenbedruckung verwendet. Die Kühlung im Flug erfolgt durch den Stauluftwärmetauscher und durch eine optionale Umluftkühlung.

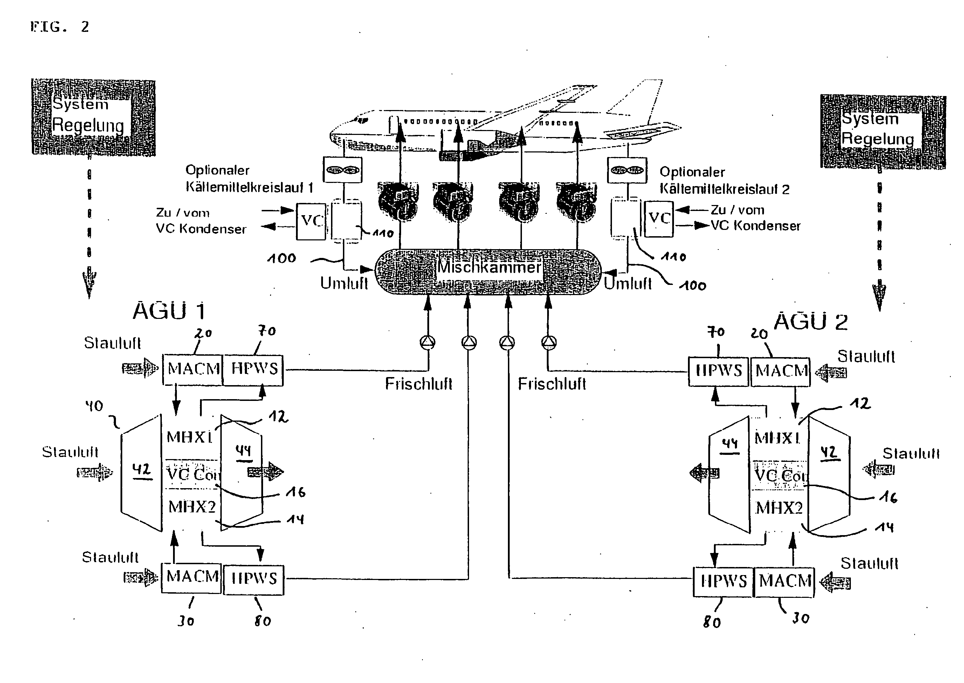

Das Klimatisierungssystem weist den Vorteil auf, dass die Leistung des Verdichtermotors auch im Bodenbetrieb bzw. in geringeren Flughöhen überwiegend bzw. ausschließlich zur Kühlung verwendet wird, so dass die aus Fig. 2 ersichtlichen Kabinentuftkreisläufe 100 mit entsprechend verringerter Kühlleistung ausgeführt werden können. Ein weiterer Vorteil ergibt sich daraus, dass im ersten Betriebsmodus ein der Turbine vorgeschalteter Wasserabscheidekreislauf nutzbar ist, so dass beispielsweise auch im Bodenbetrieb eine Entfeuchtung möglich ist.

Die Erfindung betrifft ferner ein Verfahren zur Aufbereitung von Luft zur Klimatisierung eines Raumes, insbesondere zur Klimatisierung einer Passagierkabine eines Flugzeuges, umfassend die folgenden Schritte: Verdichten von Umgebungs- oder Stauluft in einer mittels eines Motors angetriebenen Verdichtereinheit und Zufuhr der verdichteten Luft in einen Wärmetauscher, Kühlung der dem Wärmetauscher zugeführten Luft durch Stau- oder Umgebungsluft, wobei in einem ersten Betriebsmodus die in dem Wärmetauscher gekühlte Luft in einer Entspannungsstufe entspannt wird, wobei in einem zweiten Betriebsmodus die in dem Wärmetauscher gekühlte Luft überwiegend oder vollständig im Bypass um die Entspannungsstufe geführt wird, und wobei in dem ersten Betriebsmodus die Motorleistung zu Kühlzwecken sowie zur Bedruckung verwendet wird und in dem zweiten Betriebsmodus die Motorleistung zur Verdichtung der Stau- oder Umgebungsluft verwendet wird.

Im ersten Betriebsmodus kann vorgesehen sein, dass die Kühlung der Luft durch den oder die Stauluftwärmetauscher sowie durch die Entspannung der verdichteten Luft in der Turbine erfolgt. Im zweiten Betriebsmodus kann vorgesehen sein, dass die Kühlung der Luft durch den oder die Stauluftwärmetauscher sowie durch eine Umluftkühlung erfolgt.

Es kann vorgesehen sein, dass im ersten Betriebsmodus die verfügbare Motorleistung überwiegend oder ausschließlich für Kühlzwecke sowie zur Bedruckung der Kabine oder eines sonstigen zu bedruckenden Raumes verwendet wird und dass im zweiten Betriebsmodus die verfügbare Motorleistung überwiegend oder ausschließlich zur Bedruckung, d.h. zur Verdichtung der Umgebungs- oder Stauluft auf das Niveau des zu bedruckenden Raumes, insbesondere der Kabine verwendet wird.

Die verfügbare Motorleistung kann in weiterer Ausgestaltung der Erfindung dem Wert der Motorleistung entsprechen, der bei maximaler Flughöhe von dem Motor aufzubringen ist, wenn die Turbine im Bypass betrieben wird, d.h. nicht zum Antrieb des Verdichters zur Verfügung steht. In bevorzugter Ausgestaltung der Erfindung bestimmt dieser Betriebszustand die Auslegung des Verdichtermotors.

Bei vorbekannten Systemen ist die an sich verfügbare Leistung des Verdichtermotors im Bodenbetrieb und bei geringen Flughöhen weitgehend ungenutzt. In bevorzugter Ausgestaltung der Erfindung ist vorgesehen, dass der Motor im Bodenbetrieb mit über 50 %, vorzugsweise mit über 70 % und besonders bevorzugt im Bereich 70-80 % der verfügbaren Motorleistung betrieben wird.

Das Verfahren kann nach einem der Ansprüche 22 bis 29 ausgestaltet sein.

Weitere Einzelheiten und Vorteile der Erfindung werden anhand eines in der Zeichnung dargestellten Ausführungsbeispiels erläutert. Es zeigen:
- Fig. 1:: eine schematische Darstellung eines Klimatisierungssystems gemäß der Erfindung,
- Fig. 2:: eine schematische Darstellung einer Klimatisierungsanlage mit zwei Klimatisierungssystemen gemäß Fig. 1,
- Fig. 3a:: eine schematische Darstellung des Klimatisierungssystems gemäß Fig. 1 in einem ersten Betriebsmodus,
- Fig. 3b:: eine schematische Darstellung des Klimatisierungssystems gemäß Fig. 1 in einem zweiten Betriebsmodus,
- Fig. 4:: eine schematische Darstellung eines Klimatisierungssystems gemäß der Erfindung mit Nutzung der Kabinenabluft und
- Fig. 5:: eine schematische Darstellung eines Klimatisierungssystems gemäß der Erfindung mit drei Stauluftwärmetauschern und drei Welleneinrichtungen.

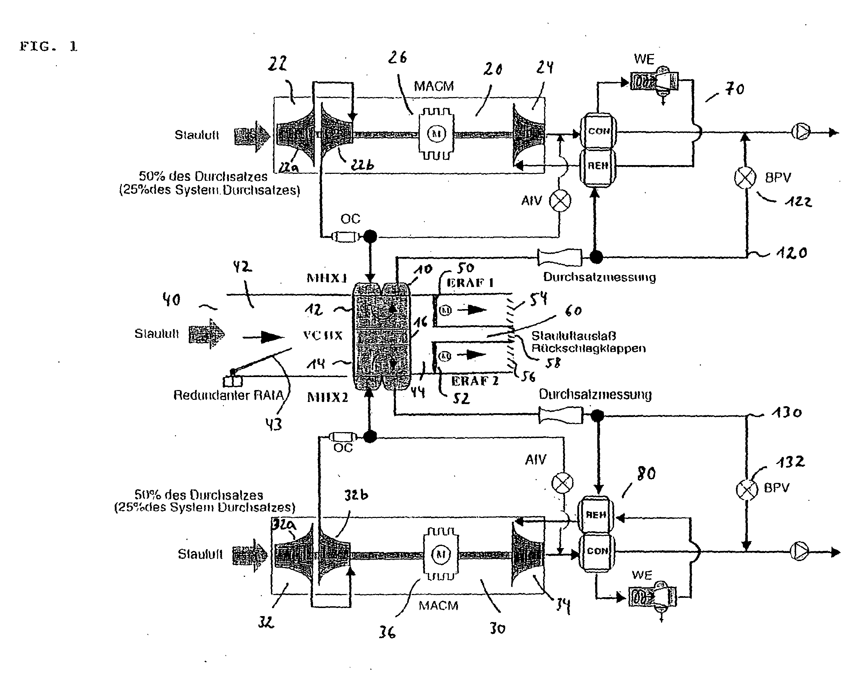

Fig. 1 zeigt eine schematische Darstellung eines Klimatisierungssystems mit zwei motorisierten Welleneinrichtungen 20, 30, die jeweils aus einem zweistufigen Verdichter 22, 32 einer Turbine 24, 34 sowie einem Elektromotor 26, 36 zum ergänzenden Antrieb der Verdichter 22, 32 bestehen. Die Welleneinrichtungen sind in den Figuren mit der Bezeichnung MACM versehen.

Das Klimatisierungssystem weist ferner einen gemeinsamen Stauluftkanal 40 auf, in dem die druckluftseitig voneinander getrennten Wärmetauschereinheiten 12, 14 angeordnet sind, die in den Figuren ferner mit den Bezeichnungen MHX1 und MHX2 bezeichnet sind. Zwischen den druckluftseitig getrennten Wärmetauschereinheiten 12, 14 befindet sich eine weitere Wärmetauschereinheit 16, die druckluftseitig mit keiner der Wärmetauschereinheiten 12 oder 14 in Verbindung steht und die in den Figuren ferner mit den Bezeichnungen VCHX und VCCon bezeichnet ist. Die weitere Wärmetauschereinheit 16 kann sich zwischen den beiden Wärmetauschereinheiten 12, 14 befinden oder beispielsweise auch am Randbereich des Stauluftkanals 40 angeordnet sein. Die Anordnung der Wärmetauschereinheiten 12, 14, 16 ist beliebig. Die Wärmetauschereinheiten 12, 14, 16 bilden den Wärmetauscher 10.

Stromabwärts des Wärmetauschers sind im Stauluftauslasskanal 44 die Gebläse 50, 52 angeordnet, die in den Figuren auch mit den Kurzbezeichnungen ERAF 1 und ERAF 2 bezeichnet sind. Die Gebläse 50, 52 werden durch einen Elektromotor angetrieben.

Wie aus Fig. 1 ersichtlich, befinden sich die Gebläse 50, 52 in strömungsmechanisch durch Wandungen voneinander getrennten Teilbereichen des Stauluftauslasskanals 44. Zwischen diesen Teilbereichen befindet sich der Gebläsebypass 60, der zur Erhöhung der Durchlässigkeit während des Fluges dient. Stromabwärts der Gebläse 50, 52 sowie im Auslassbereich des Bypasskanals 60 befinden sich die Rückschlagventile 54, 56 und 58.

Auf der Einlassseite des Staulufteinlasskanals 42 befindet sich die Stauluftkanaleinlassklappe 43 (Duplex RAIA).

Die Welleneinrichtungen stehen mit den Wasserabscheidekreisläufen 70, 80 in Verbindung. Diese bestehen in bekannter Weise aus einem Reheater (REH), einem Kondensor (CON) und einem Wasserabscheider (WE).

Die Reheater (REH) stehen mit den Auslassseiten der Wärmetauschereinheiten 12, 14 in Verbindung. In den Verbindungsleitungen befinden sich Messelemente (Venturi) zur Messung des Volumenstromes der die Wärmetauschereinheiten 12, 14 verlassenden Luft.

Wie aus Fig. 1 weiter ersichtlich, sind Bypassleitungen 120, 130 vorgesehen, die sich von der Auslassseite der Wärmetauschereinheiten 12, 14 zu der Turbinenauslassseite erstrecken und die mittels eines darin angeordneten Ventils 122, 132 (BPV) absperrbar sind.

Um eine etwaige Vereisung an der Turbinenauslassseite bzw. im Kondensor (CON) zu vermeiden bzw. in Grenzen zu halten, ist des weiteren eine Bypassleitung vorgesehen, die sich von der Verdichterauslassseite zur Turbinenauslassseite erstreckt und die mit einem Ventil (AIV=Anti-Icing-Valve) absperrbar ist.

Der Betrieb des in Fig. 1 gezeigten Klimatisierungssystem gestaltet sich wie folgt:

Die Verdichter 22, 32 werden mit Umgebungs- oder Stauluft beaufschlagt. Die Verdichterleistung wird einerseits von den Turbinen 24, 34 und ergänzend von den Elektromotoren 26, 36 aufgebracht. Diese Komponenten bilden zusammen je eine der Welleneinrichtungen 20, 30. Die verdichtete Luft strömt getrennt in jeweils eine der in dem gemeinsamen Stauluftkanal 40 angeordneten Wärmetauschereinheiten 12, 14 und wird darin mittels der in den Stauluftkanal 40 geführten Stau- oder Umgebungsluft gekühlt.

Die auf diese Weise gekühlte Luft gelangt nach dem Passieren der Durchflussmesseinrichtung (Venturi) in den Reheater (REH) und anschließend in den Kondensor (CON), in dem die in der Luft befindliche Feuchtigkeit zu einem großen Teil auskondensiert wird. Das auskondensierte Wasser wird in dem Wasserabscheider (WE) abgeschieden. Die Luft wird sodann durch den Reheater geführt, dabei geringfügig erwärmt und anschließend in den Turbinen 24, 34 entspannt. Dabei wird die Luft stark abgekühlt. Die auf diese Weise abgekühlte Luft dient zur Kühlung des Kondensors (CON) und wird dabei geringfügig erwärmt. Sie gelangt anschließend über ein Rückschlagventil in eine Mischkammer bzw. in die Passagierkabine.

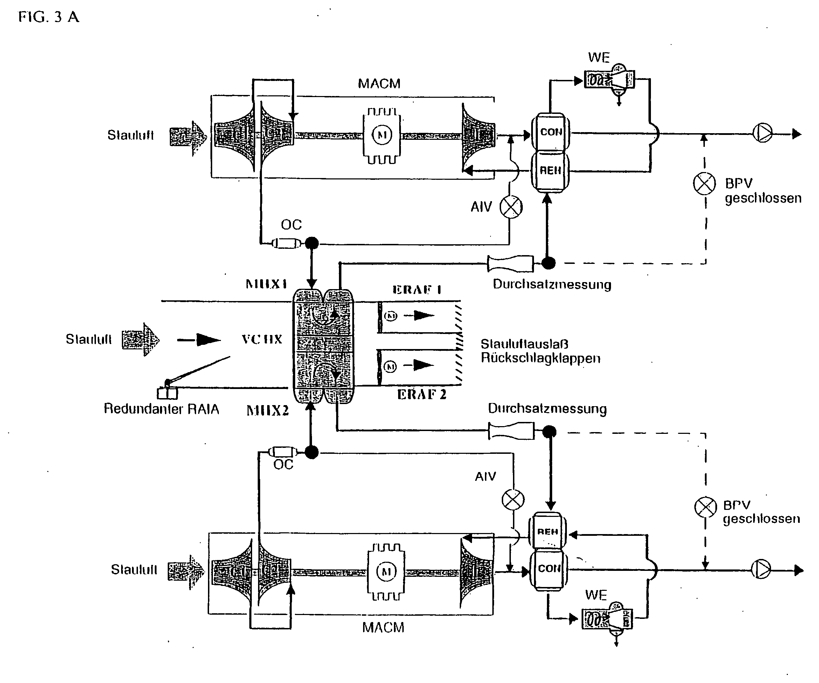

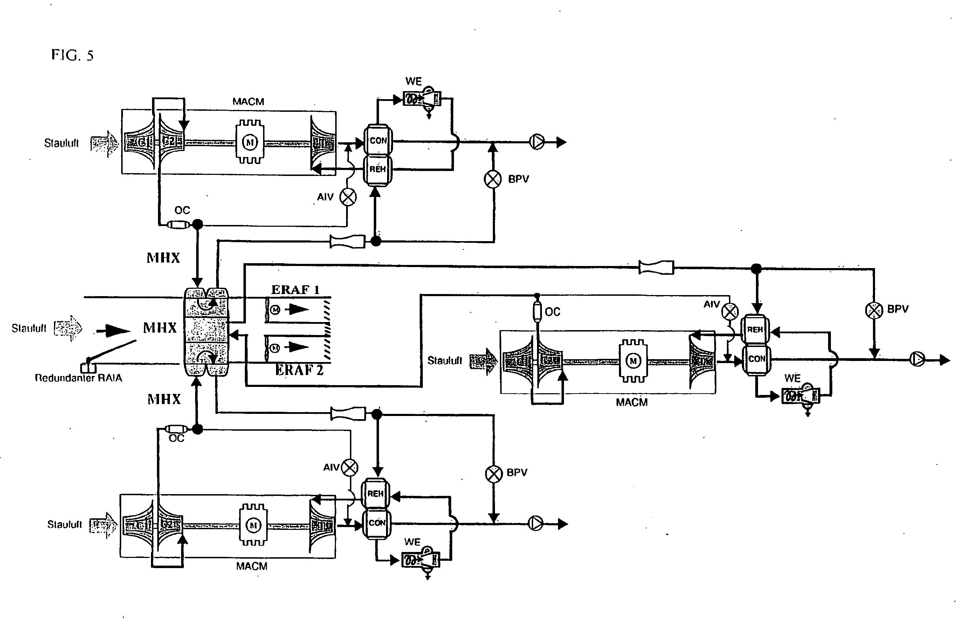

Dieser Betriebsmodus, der insbesondere im Bodenbetrieb sowie bei geringeren Flughöhen Verwendung findet, ist in Fig. 3a dargestellt.

Die Kühlung der den Wärmetauschereinheiten 12, 14 zugeführten Luft erfolgt über Stau- bzw. Umgebungsluft, die nach Passieren der verstellbaren Stauluftkanaleinlassklappe 43 in den Staulufteinlasskanal 42 strömt und sodann die Wärmetauschereinheiten 12, 14, 16 durchströmt.

Stromabwärts der Wärmetauschereinheiten 12, 14, 16 befinden sich Gebläse 50, 52, die in strömungsmechanisch voneinander getrennten Teilbereichen des Stauluftauslasskanals 44 angeordnet sind. Dabei ist vorgesehen, dass die strömungsmechanische Trennung des Stauluftauslasskanals 44 nicht in dem sich an den Wärmetauscher 10 anschließenden Bereich, sondern davon stromabwärts erfolgt. Dies hat gegenüber einer durchgehenden strömungsmechanischen Trennung des Stauluftauslasskanals 44 den Vorteil dass auch bei Ausfall eines Gebläses 50, 52 das andere Gebläse Luft durch sämtliche Wärmetauschereinheiten 12, 14, 16 fördern kann.

Die Gebläse 50, 52 sind elektromotorisch angetrieben und dienen im Bodenbetrieb zur Förderung von Umgebungsluft durch den Stauluftkanal 40. Im Flugbetrieb erfolgt die Durchströmung des Stauluftkanals 40 aufgrund des Staudrucks. Um dabei die Durchlässigkeit des Systems zu erhöhen ist der Bypasskanal 60 vorgesehen.

Um die Strömung durch den Wärmetauscher 10 sicherzustellen und Rückströmungen zu vermeiden, sind auslassseitig im Endbereich des Stauluftauslasskanals 44 die Rückschlagventile 54, 56, 58 vorgesehen.

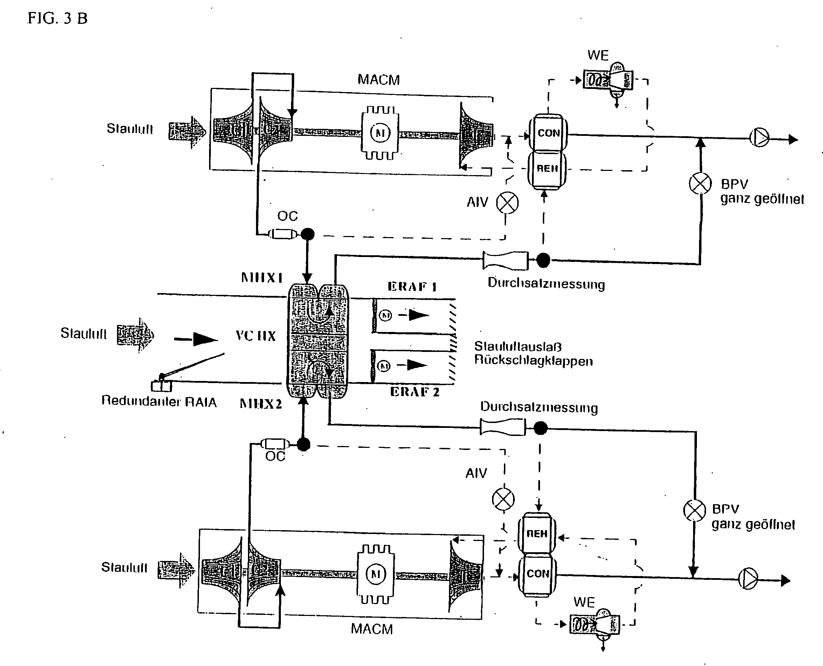

In größeren Flughöhen werden gemäß der in Fig. 3b dargestellten Betriebsweise die Ventile 122, 132 geöffnet, um einen Bypass von Wasserabscheidekreislauf 70, 80 und den Turbinen 24, 34 mittels der Bypassleitungen 120, 130 zu gewährleisten. In diesem Fall erfolgt die Kühlung nicht mittels der Turbinen 24, 34, sondern mittels der Wärmetauschereinheiten 12, 14, durch die die Luft nach ihrer Verdichtung in den Verdichtern 22, 32 strömt. Auslassseitig wird die Luft sodann über die Bypassleitungen 120, 130 in die Auslassleitungen der Turbinen 24, 34 bzw. in die Einlassleitungen der Mischkammer bzw. der Passagierkabine geführt. Bei großen Flughöhen kann die Kühlung ohne Einsatz der Turbinen 24, 34 ausreichend sein, da die zugeführte Stauluft sehr kalt ist.

Aufgrund des Bypasses der Turbinen 24, 34 erfolgt der Antrieb der Verdichter 22, 32 in diesem Betriebsmodus ausschließlich mit Hilfe der Motoren 26, 36.

Fig. 2 zeigt zwei der Klimatisierungssysteme gemäß Fig. 1 mit den Bezeichnungen (AGU1 und AGU2). Fig. 2 zeigt weiter die der Passagierkabine vorgeschaltete Mischkammer (Mixer Unit), in die die Auslassluft des Klimatisierungssystems gemäß Fig. 1 geleitet wird. Das System gemäß Fig. 2 beinhaltet somit 4 gleichwertige Frischluftzuführungen.

Aus Fig. 2 weiter ersichtlich sind die Kabinenluftkreisläufe 100, mittels derer Luft aus den Kabinen mittels eines Gebläses abgeführt, gekühlt und sodann der Mischkammer zugeführt wird. Die Kabinenluftkreisläufe 100 umfassen jeweils einen Verdampfer 110, der zusammen mit den als Kondensor ausgeführten Wärmetauschereinheiten 16 ein Bestandteil eines Kühlmittelkreislaufes bildet. Dabei ist vorgesehen, dass das Kühlmittel in dem Verdampfer 110 verdampft und dabei der im Kreislauf geführten Kabinenluft Wärme entzieht. Das verdampfte Kühlmittel wird in der Wärmetauschereinheit 16 kondensiert und gibt Wärme an den durch den Stauluftkanal 40 strömenden Stauluftstrom ab.

Wie aus Fig. 2 weiter ersichtlich, können zwischen der Mischkammer und der Kabine elektrische Heizvorrichtungen vorgesehen sein, um die Kabinenluft entsprechend der unterschiedlichen Kabinenanforderungen auf den gewünschten Sollwert zu bringen.

Aus Fig. 1 und 2 ergibt sich, dass das gesamte Klimatisierungssystem ohne Zapfluft von den Triebwerken oder von einem Hilfsaggregat auskommt. Sowohl die der Kabine zugeführte Frischluft als auch die zur Kühlung durch den Stauluftkanal geleitete Luft besteht in diesem Ausführungsbeispiel ausschließlich aus Umgebungs- bzw. Stauluft.

Die Welleneinrichtungen können parallel zueinander angeordnet sein. Zwischen den Welleneinrichtungen kann sich der Stauluftkanal befinden. In dem Bereich neben dem Staulufteinlasskanal können sich die Stauluft- bzw. Umgebungslufteinlässe für die Welleneinrichtungen befinden.

Die Wärmetauschereinheiten können in Strömungsrichtung nebeneinander angeordnet sein oder auch übereinander. Des weiteren ist es möglich, die Anbindung der Welleneinrichtungen an die Wärmetauschereinheiten seitlich oder unterhalb der Wärmetauschereinheiten vorzunehmen. Selbstverständlich sind auch umgekehrte Anordnungen mit oberhalb der Wärmetauschereinheiten angeordneten Welleneinrichtungen denkbar. Ferner ist es ebenfalls möglich, je nach Bedarf die Welleneinrichtungen und die Wärmetauschereinheiten nicht rechtwinklig zueinander, sondern davon abweichend beispielsweise in einem 45 °-Winkel anzuordnen.

Wie aus Fig. 1 und Fig. 2 ersichtlich sind die Hauptkomponenten jedes Strömungspfades für aufzubereitende Frischluft die motorisierte Welleneinrichtung, die Wärmetauschereinheit, ein Wasserabscheidekreislauf, die Bypassleitung mit Bypassventil, das Anti-Icing-Ventil, sowie die Durchflussmessung.

Die gemeinsamen Komponenten der Frischluftpfade sind die Stauluftkanaleinlassklappe, der Stauluftkanal mit Rückschlagventilen, die elektrisch betriebenen Gebläse, das Kühlsystem für die im Kreislauf geführte Kabinenluft sowie eine Steuer- bzw. Kontrolleinheit.

Um eine optimale Kabinentemperierung sicherzustellen, können die in Fig. 2 dargestellten elektrischen Heizvorrichtungen vorgesehen sein, wobei pro Kabinenbereich eine Heizvorrichtung vorgesehen sein kann. Darüber hinaus kann vorgesehen sein, dass heiße verdichtende Luft stromabwärts der Verdichter abgezweigt wird.

Diese Luft wird dann über Ventile mit der kalten, von der Mischkammer in die Passagierkabine strömenden Luft gemischt.

Die für den Heizbetrieb erforderliche Temperaturerhöhung der Frischluft wird durch die Verdichtung in den Verdichtern erzielt. Wie oben ausgeführt, können zusätzlich elektrische Heizvorrichtungen eingesetzt werden.

Die Temperaturregelung des Gesamtsystems erfolgt über die entsprechende Veränderung des Betriebes der Gebläse 50, 52 (im Bodenbetrieb), über die Öffnungsstellung der Stauluftkanaleinlassklappe 43, über die elektrischen Heizvorrichtungen sowie mittels der Kühlung der im Kreislauf geführten Kabinenluft.

Um ein etwaiges Vereisen zu verhindern bzw. in Grenzen zu halten, kann vorgesehen sein, dass das entsprechende Ventil AIV vorübergehend geöffnet wird, um heiße Verdichterauslassluft in den Auslassbereich der Turbinen zu führen.

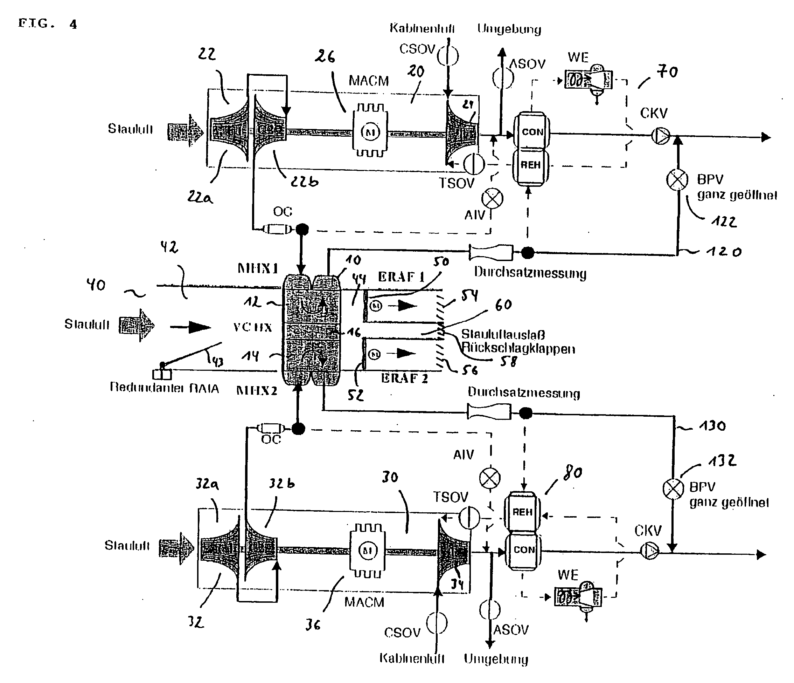

Fig. 4 zeigt eine schematische Darstellung eines Klimatisierungssystems gemäß der Erfindung mit Nutzung der Kabinenabluft. In Flugzeugen wird im Flug die Kabine bedruckt, um die für die Menschen notwendigen Umgebungsbedingungen zu erreichen. Aufgrund des mit der Flughöhe abnehmenden Umgebungsdruckes vergrößert sich die Differenz zwischen Kabinendruck und Umgebungsdruck mit zunehmender Flughöhe. Die Kabinenluft wird an die Umgebungsluft geleitet, indem sie über die Ventile nutzlos entspannt wird.

Es ist daher vorgeschlagen worden, ein System zur Nutzung von Kabinenabluft (Cabine Air Recovery (CAR)) vorzusehen, mittels dessen der Energiegehalt der Kabinenabluft genutzt wird. Dabei wird die Kabinenabluft zuerst über eine Turbine entspannt und dann an die Umgebung weitergeleitet. Die dabei entstehende Leistung kann z. B. direkt zum Antrieb eines Kompressors oder auch zur Stromerzeugung mittels eines Generators genutzt werden.

Fig. 4 zeigt den Einsatz eines derartigen Systems in einem Klimatisierungssystem gemäß der vorliegenden Erfindung. Wie aus Fig. 4 ersichtlich, kann die Kabinenabluft durch eine entsprechende Verbiridungsleitung zur Einlassseite der Turbine T geführt werden. Diese Leitung ist mittels des Ventils CSOV (cabine shut off valve) absperrbar. Bei Betrieb der Cabine Air Recovery in größeren Flughöhen wird dieses Ventil geöffnet, um die Kabinenabluft in die Turbine T zu leiten.

In der Verbindungsleitung zwischen dem Wasserabscheidekreislauf und dem Turbineneinlass befindet sich das Absperrventil TSOV (turbine shut off valve). In der Auslassleitung der Turbine befindet sich ferner das Check Valve (CKV). Dieses Ventil ist stromaufwärts der Mündung der Bypassleitung in der Turbinenauslassleitung angeordnet, wie dies aus Fig. 4 hervorgeht. Die Ventile TSOV und CKV sind während der Cabine Air Recovery geschlossen, um die Vermischung von Frischluft mit der Abluft zu verhindern.

Von der Turbinenauslassleitung zweigt eine Leitung ab, in der das Ventil ASOV (ambient shut off valve) angeordnet ist. Dieses Ventil wird während der Cabine Air Recovery geöffnet, wodurch die Turbinenauslassluft an die Umgebung und nicht in den Kondensor CON bzw. in die Mischkammer geleitet wird.

In dem in Fig. 4 dargestellten Betriebsmodus, in dem die in dem Verdichter C verdichtete Luft über einen Turbinen-Bypass der Mischkammer zugeführt wird, kann die Turbine T für die Cabine Air Recovery genutzt werden. Dabei strömt Kabinenluft über das geöffnete Ventil CSOV in die Turbine, wird dort entspannt und über die Auslassleitung mit dem geöffneten Ventil ASOV an die Umgebung abgegeben. Die geschlossenen Ventile TSOV und CKV verhindern eine Mischung der Kabinenabluft mit der der Kabine zuzuführenden Frischluft.

Wie aus Fig. 4 hervorgeht, ist ein derartiges System für jede der Welleneinrichtungen MACM vorgesehen.

Die verfügbare Wellenleistung aus der Entspannung der Kabinenabluft über die Turbine T nimmt mit der Flughöhe zu. Dies entspricht den Anforderungen für die Verdichtung, die ebenfalls mit der Flughöhe zunehmen, da eine größere Druckdifferenz zwischen Kabine und Umgebung herrscht.

Fig. 2 zeigt eine Ausgestaltung der Erfindung, bei der pro Klimatisierungssystem (AGU 1, 2) zwei Wärmetauschereinheiten MHX 1, MHX 2 in einem Stauluftkanal zusammengefasst sind. Die sich daraus ergebenden naheliegenden Systemkonfigurationen sind somit 2 oder 2 + 2 oder 2 + 2+ 2 etc. Wärmetauschereinheiten.

Die Erfindung ist jedoch nicht auf zwei Wärmetauschereinheiten pro Stauluftkanal bzw. pro AGU beschränkt. Vielmehr können auch drei oder mehr als drei Wärmetauschereinheiten vorgesehen sein. Grundsätzlich ist es ebenso denkbar, dass nur eine Wärmetauschereinheit, d.h. ein Wärmetauscher vorgesehen ist.

Die vorliegende Erfindung kann grundsätzlich mit einem oder zwei oder mehr Wärmetauschern ausgeführt sein. Dabei kann vorgesehen sein, dass jeder dieser Wärmetauscher in einem eigenen Stauluftkanal angeordnet ist. Dabei kann vorgesehen sein, dass jeder der Wärmetauscher druckluftseitig mit einer Welleneinrichtung in Verbindung steht. Auch ist es denkbar, dass zwei oder mehr als zwei Wärmetauscher in einem Stauluftkanal angeordnet sind.

Fig. 5 zeigt eine entsprechende Architektur, bei der der Stauluftwärmetauscher aus drei druckluftseitig getrennten Wärmetauschereinheiten besteht, von denen jede druckluftseitig mit einer der Welleneinrichtungen MACM in Verbindung steht, wie dies aus Fig. 5 hervorgeht. Fig. 5 zeigt eine Architektur mit drei Welleneinrichtungen MACM. Neben einer derartigen Architektur sind selbstverständlich auch Systeme mit mehr als drei Stauluftwärmetauschereinheiten im Stauluftkanal denkbar. Entsprechend können auch mehr als drei Welleneinrichtungen eingesetzt werden. Die mit den Wärmetauschereinheiten in Verbindung stehenden Welleneinrichtungen können identisch oder auch voneinander abweichend ausgeführt sein. Fig. 5 zeigt ein System mit drei identischen Welleneinrichtungen bzw. identischen Verschaltungen der Welleneinrichtungen. Die Verdichter der Welleneinrichtungen werden mit Stau- oder Umgehungsluft beaufschlagt. Nach der Verdichtung wird die Luft der Druckluftseite der Wärmetauschereinheiten zugeführt. Anschließend erfolgt in einem Wasserabscheidekreislauf die Abscheidung von Wasser. Die auf diese Weise entfeuchtete Luft wird in der Turbine entspannt und sodann der Kabine bzw. einer Mischkammer zugeführt. Wie aus Fig. 5 weiter ersichtlich, sind alle drei Welleneinrichtungen mit einem Turbinenbypass ausgeführt, der mittels des Ventils BPV verschließbar ist und der den druckluftseitigen Auslass der Wärmetauschereinheiten mit einer Verbindungsleitung zwischen Kondensor und Mischkammer bzw. der Kabine verbindet.

## Patentansprüche

1. Klimatisierungssystem, insbesondere Klimatisierungssystem zur Klimatisierung einer Passagierkabine eines Flugzeuges, mit wenigstens einem in einem Stauluftkanal (40) angeordneten Wärmetauscher (10), mit wenigstens einer mit dem Wärmetauscher (10) druckluftseitig in Verbindung stehenden Welleneinrichtung (20,30) mit wenigstens einem einlassseitig mit Stau- oder Umgebungsluft beaufschlagten Verdichter (22,32) und wenigstens einer Turbine (24,34), mit wenigstens einem Motor (26,36) zum Antrieb des Verdichters, mit einer Turbinen-Bypassleitung (120,130) zur druckluftseitigen Umgehung der Turbine sowie mit wenigstens einer Steuereinrichtung, mittels derer das Klimatisierungssystem in einem ersten Betriebsmodus betreibbar ist, in dem die verdichtete Luft in der Turbine (24,34) entspannt wird, und in einem zweiten Betriebsmodus betreibbar ist, in dem die verdichtete Luft überwiegend oder vollständig durch die Turbinen-Bypassleitung (120,130) geführt wird, wobei die Steuereinrichtung mit dem Motor (26,36) in Verbindung steht und derart ausgeführt ist, dass der Motor in dem ersten Betriebsmodus derart betrieben wird, dass die Motorleistung für Kühlzwecke sowie zur Bedruckung verwendet wird, und in dem zweiten Betriebsmodus derart betrieben wird, dass die Motorleistung zur Verdichtung der Stau- oder Umgebungsluft verwendet wird,
**dadurch gekennzeichnet,**
**dass** der Turbine ein Wasserabscheider (WE) vorgeschaltet ist und die Turbinen-Bypassleitung (120,130) sowohl den Wasserabscheider (WE) als auch die Turbine druckluftseitig umgeht.

2. Klimatisierungssystem nach Anspruch 1, **dadurch gekennzeichnet, dass** die Steuereinrichtung derart ausgeführt ist, dass der erste Betriebsmodus im Bodenbetrieb und/oder bei geringen Flughöhen und der zweite Betriebsmodus bei demgegenüber größeren Flughöhen angewandt wird.

3. Klimatisierungssystem nach einem der vorangegangenen Ansprüche, mit wenigstens einem in einem Stauluftkanal (40) angeordneten Wärmetauscher (10) zur Kühlung von Druckluft sowie mit wenigstens einer ersten und einer zweiten Welleneinrichtung (20, 30), wobei der Wärmetauscher (10) wenigstens eine erste und eine davon druckluftseitig getrennte zweite Wärmetauschereinheit (12, 14) umfasst, die in dem gemeinsamen Stauluftkanal (40) angeordnet sind und von denen jeweils eine druckluftseitig mit jeweils einer der Welleneinrichtungen (20, 30) in Verbindung steht, wobei die Welleneinrichtungen (20, 30) Verdichter (22, 32) aufweisen, die auslassseitig jeweils mit dem druckluftseitigen Einlass der Wärmetauschereinheiten (12, 14) in Verbindung stehen, wobei die Verdichter (22, 32) einlassseitig mit Stau- oder Umgebungsluft beaufschlagt werden und dass ein oder mehrere Motoren (26, 36) vorgesehen sind, mittels derer die Verdichter (22, 32) antreibbar sind.

4. Klimatisierungssystem nach Anspruch 3, **dadurch gekennzeichnet, dass** die Wärmetauschereinheiten (12, 14) eine bauliche Einheit bilden.

5. Klimatisierungssystem nach Anspruch 3 oder 4, **dadurch gekennzeichnet, dass** für die wenigstens zwei Wärmetauschereinheiten (12, 14) ein gemeinsamer Staulufteinlasskanal (42) vorgesehen ist.

6. Klimatisierungssystem nach Anspruch 5, **dadurch gekennzeichnet, dass** in dem Staulufteinlasskanal (42) eine in ihrer Position verstellbare Stauluftkanaleinlassklappe (43) vorgesehen ist.

7. Klimatisierungssystem nach einem der Ansprüche 3 bis 6, **dadurch gekennzeichnet, dass** für die wenigstens zwei Wärmetauschereinheiten (12, 14) ein gemeinsamer Stauluftauslasskanal (44) vorgesehen ist.

8. Klimatisierungssystem nach einem der Ansprüche 3 bis 7, **dadurch gekennzeichnet, dass** in dem Stauluftauslasskanal (44) ein, zwei oder mehr motorisch angetriebene Gebläse (50, 52) vorgesehen sind.

9. Klimatisierungssystem nach Anspruch 8, **dadurch gekennzeichnet, dass** stromabwärts der Gebläse (50, 52) Rückschlagventile (54, 56) vorgesehen sind.

10. Klimatisierungssystem nach einem der vorhergehenden Ansprüche, **dadurch gekennzeichnet, dass** in dem Stauluftauslasskanal (44) ein oder mehrere mit einem Rückschlagventil (58) versehene Gebläse-Bypässe (60) angeordnet sind.

11. Klimatisierungssystem nach einem der vorhergehenden Ansprüche, **dadurch gekennzeichnet, dass** es sich bei den Verdichtern (22, 32) um mehrstufige Verdichter handelt, von denen die erste Stufe (22a, 32a) einlassseitig mit Stau- oder Umgebungsluft beaufschlagt wird und die letzte Stufe (22b, 32b) auslassseitig mit dem druckluftseitigen Einlass der Wärmetauschereinheiten (12, 14) in Verbindung steht.

12. Klimatisierungssystem nach einem der vorhergehenden Ansprüche, **dadurch gekennzeichnet, dass** die Welleneinrichtungen (20, 30) wenigstens einen Verdichter (22, 32), Turbine (24, 34) sowie Motor (26, 36) aufweisen.

13. Klimatisierungssystem nach einem der vorhergehenden Ansprüche, **dadurch gekennzeichnet, dass** jede der Welleneinrichtungen (20, 30) mit jeweils einem Wasserabscheidekreislauf (70, 80) in Verbindung steht.

14. Klimatisierungssystem nach einem der vorhergehenden Ansprüche, **dadurch gekennzeichnet, dass** der Wärmetauscher (10) eine weitere mit Stau- oder Umgebungsluft beaufschlagbare Wärmetauschereinheit (16) aufweist, die mit der ersten sowie der zweiten Wärmetauschereinheit (12, 14) druckluftseitig nicht in Verbindung steht.

15. Klimatisierungssystem nach einem der vorhergehenden Ansprüche, **dadurch gekennzeichnet, dass** ein Kabinenluftkreislauf (100) vorgesehen ist, in dem Mittel zur Abfuhr von Wärme aus der im Kreislauf geführten Luft angeordnet sind.

16. Klimatisierungssystem nach Anspruch 15, **dadurch gekennzeichnet, dass** die Mittel einen Wärmetauscher umfassen.

17. Klimatisierungssystem nach Anspruch 15, **dadurch gekennzeichnet, dass** die Mittel einen Verdampfer (110) umfassen.

18. Klimatisierungssystem nach Anspruch 14 und 17, **dadurch gekennzeichnet, dass** die weitere in dem Stauluftkanal angeordnete Wärmetauschereinheit (16) als Kondensor ausgeführt ist und mit dem Verdampfer (110) in Verbindung steht, wobei die Wärmetauschereinheit (16) und der Verdampfer (110) Bestandteile eines Kühlmittelkreislaufes sind.

19. Klimatisierungssystem nach einem der vorhergehenden Ansprüche, **dadurch gekennzeichnet, dass** eine oder mehrere sich von der Auslassseite der Wärmetauschereinheiten (12, 14) zu der Auslassseite der Turbinen (24, 34) erstreckende Bypassleitungen (120, 130) vorgesehen sind, die jeweils mittels eines darin angeordneten Ventils (122, 132) absperrbar sind.

20. Klimatisierungssystem nach einem der vorhergehenden Ansprüchen, **dadurch gekennzeichnet, dass** die Turbine (T) einlassseitig über eine mit einem Ventil (CSOV) verschließbare Leitung mit der Kabine oder einer dieser vorgeschalteten Mischkammer und auslassseitig über eine mit einem Ventil (ASOV) verschließbare Leitung mit der Umgebung in Verbindung steht, und dass Mittel vorgesehen sind, durch die die Turbine (T) von den die in dem Kompressor (C) verdichtete Luft führenden Leitungen absperrbar ist.

21. Klimatisierungssystem nach Anspruch 20, **dadurch gekennzeichnet, dass** die Mittel als Ventile (TSOV, CKV) ausgeführt sind, die in der die Turbine (T) mit dem Wasserabscheidekreislauf verbindenden Einlassleitung sowie in der die Turbine (T) mit der Mischkammer oder der Kabine verbindenden Auslassleitung angeordnet sind.

22. Verfahren zur Aufbereitung von Luft zur Klimatisierung eines Raumes, insbesondere zur Klimatisierung einer Passagierkabine eines Flugzeuges, umfassend die folgenden Schritte:
- Verdichten von Stau- oder Umgebungsluft in einer mittels eines Motors (26,36) angetriebenen Verdichtereinheit (22,32) und Zufuhr der verdichteten Luft in einen Wärmetauscher (10),
- Kühlung der dem Wärmetauscher (10) zugeführten Luft durch Stau- oder Umgebungsluft,
- wobei in einem ersten Betriebsmodus die in dem Wärmetauscher (10) gekühlte Luft einem Wasserabscheider (WE) zugeführt und in einer Entspannungsstufe (24,34) entspannt wird,
- wobei in einem zweiten Betriebsmodus die in dem Wärmetauscher (10) gekühlte Luft überwiegend oder vollständig im Bypass (120,130) um den Wasserabscheider (WE) und die Entspannungsstufe (24,34) geführt wird,
- und wobei in dem ersten Betriebsmodus die Motorleistung zu Kühlzwecken sowie zur Bedruckung verwendet wird und in dem zweiten Betriebsmodus die Motorleistung zur Verdichtung der Stau- oder Umgebungsluft verwendet wird.

23. Verfahren nach Anspruch 22, umfassend die folgenden Schritte:
Verdichten von Umgebungs- oder Stauluft in einer ersten motorisch angetriebenen Verdichtereinheit (22) und Zufuhr der verdichteten Luft in eine erste Wärmetauschereinheit (12) eines Wärmetauschers (10);
Verdichten von Umgebungs- oder Stauluft in einer zweiten motorisch angetriebenen Verdichtereinheit (32) und Zufuhr der verdichteten Luft in eine zweite, von der ersten Wärmetauschereinheit (12) druckluftseitig getrennte Wärmetauschereinheit (14) des Wärmetauschers (10) und
Kühlung der den Wärmetauschereinheiten (12, 14) zugeführten Luft durch Stau- oder Umgebungsluft;
wobei in einem ersten Betriebsmodus die in den Wärmetauschereinheiten (12, 14) gekühlte Luft einem Wasserabscheidekreislauf (70, 80) zugeführt, in einer Entspannungsstufe (24, 34) entspannt und in den zu klimatisierenden Raum oder in eine vorgeschaltete Mischkammer geführt wird,
und wobei in einem zweiten Betriebsmodus die in den Wärmetauschereinheiten (12, 14) gekühlte Luft unter Umgehung des Wasserabscheidekreislaufes (70, 80) und der Entspannungsstufe (24, 34) unmittelbar in den zu klimatisierenden Raum oder in eine vorgeschaltete Mischkammer geführt wird.

24. Verfahren nach Anspruch 23, **dadurch gekennzeichnet, dass** der erste Betriebsmodus des Verfahrens im Bodenbetrieb des Flugzeuges und in geringen Flughöhen des Flugzeuges und der zweite Betriebsmodus in demgegenüber größeren Flughöhen angewandt wird.

25. Verfahren nach Anspruch 23 oder 24 **dadurch gekennzeichnet, dass** die Kühlleistung bei der Kühlung der den Wärmetauschereinheiten (12, 14) zugeführten Luft durch Stau- oder Umgebungsluft durch die Änderung der Position einer Stauluftkanaleinlassklappe (43) und/oder durch die Änderung der Leistung von im Stauluftauslasskanal (44) angeordneten Gebläsen (50, 52) gesteuert oder geregelt wird.

26. Verfahren nach einem der Ansprüche 23 bis 25, **dadurch gekennzeichnet, dass** die Raumluft, insbesondere die Kabinenluft, zumindest teilweise im Kreislauf geführt wird und dabei gekühlt wird.

27. Verfahren nach Anspruch 26, **dadurch gekennzeichnet, dass** die Kühlung mittels eines Kühlmediums erfolgt, das im Kreislauf geführt wird, und dass dem Kühlmedium in einer in dem Stauluftkanal (40) des Klimatisierungssystems angeordneten Wärmetauschereinheit (16) Wärme entzogen wird.

28. Verfahren nach einem der Ansprüche 23 bis 27, **dadurch gekennzeichnet, dass** in dem zweiten Betriebsmodus Kabinenabluft in der Turbine (T) entspannt und sodann der Umgebungsluft zugeführt wird.

29. Verfahren nach einem der Ansprüche 22 bis 28, wobei in dem ersten Betriebsmodus über 50% der verfügbaren Motorleistung zu Kühlzwecken sowie zur Bedruckung verwendet wird.

## Claims

1. Air-conditioning system, in particular an air-conditioning system for air-conditioning of a passenger cabin in an aircraft, having at least, one heat-exchanger (10) which is arranged in a ram-air channel (40), having at least one shaft device (20,30) which is connected on the compressed-air side to the heat-exchanger (10), has at least one compressor (22,32) to whose inlet side the ram-air or external air is applied, and has at least one turbine (24,34), having at least one motor (26,36) for driving the compressor, having a turbine bypass line (120,130) for bypassing the turbine on the compressed-air side, and having at least one control device by means of which the air-conditioning system can be operated in a first operating mode in which the compressed air is expanded in the turbine (24,34), and can be operated in a second operating mode in which the majority or all of the compressed air is passed through the turbine bypass line (120,130), with the control device being connected to the motor (26,36) and being designed such that, in the first operating mode, the motor is operated in such a way that the motor power is used for cooling purposes and for forcing air to flow and, in the second operating mode is operated in such a manner that the motor power is used for compression of the ram-air or external air,
**characterized**
**in that** the turbine is preceded by a water separator (WE), and the turbine bypass line (120,130) bypasses both the water separator (WE) and the turbine on the compressed-air side.

2. Air-conditioning system according to Claim 1, **characterized in that** the control device is designed such that the first operating mode is used in ground operation and/or at low altitudes, and the second operating mode is used at altitudes higher than this.

3. Air-conditioning system according to one of the preceding claims, having at least one heat-exchanger (10), which is arranged in a ram-air channel (40), for cooling compressed air, and having at least one first and one second shaft device (20,30), with the heat-exchanger (10) comprising at least one first and one second heat-exchanger unit (12,14), with the second heat-exchanger unit (14) being separated from the first on the compressed-air side, which heat-exchanger units (12,14) are arranged in the common ram-air channel (40) and each of which is connected on the compressed-air side to a respective one of the shaft devices (20,30), with the shaft devices (20,30) having compressors (22,32) which are respectively connected on the outlet side to the inlet of the heat-exchanger units (12,14) on the compressed-air side, with ram-air or external air being applied to the inlet side of the compressors (22,32), and in that one or more motors (26,36) are provided, by means of which the compressors (22,32) can be driven.

4. Air-conditioning system according to Claim 3, **characterized in that** the heat-exchanger units (12,14) form a physical unit.

5. Air-conditioning system according to Claim 3 or 4, **characterized in that** a common ram-air inlet channel (42) is provided for the at least two heat-exchanger units (12,14).

6. Air-conditioning system according to Claim 5, **characterized in that** a variable-position ram-air channel inlet valve (43) is provided in the ram-air inlet channel (42).

7. Air-conditioning system according to one of Claims 3 to 6, **characterized in that** a common ram-air outlet channel (44) is provided for the at least two heat-exchanger units (12,14).

8. Air-conditioning system according to one of Claims 3 to 7, **characterized in that** one, two or more motor-driven fans (50,52) is or are provided in the ram-air outlet channel (44).

9. Air-conditioning system according to Claim 8, **characterized in that** non-return valves (54,56) are provided downstream from the fans (50,52).

10. Air-conditioning system according to one of the preceding claims, **characterized in that** one or more fan bypasses (60) which are provided with a non-return valve (58), are arranged in the ram-air outlet channel (44).

11. Air-conditioning system according to one of the preceding claims, **characterized in that** the compressors (22,32) are multistage compressors, with ram-air or external air being applied to the inlet side of the first stage (22a,32a) and with the outlet side of the last stage (22b,32b) being connected to the inlet on the compressed-air side of the heat-exchanger units (12,14).

12. Air-conditioning system according to one of the preceding claims, **characterized in that** the shaft devices (20,30) have at least one compressor (22,32), turbine (24,34) and motor (26,36).

13. Air-conditioning system according to one of the preceding claims, **characterized in that** each of the shaft devices (20,30) is connected to a respective water separation circuit (70,80).

14. Air-conditioning system according to one of the preceding claims, **characterized in that** the heat-exchanger (10) has a further heat-exchanger unit (16) to which ram-air or external air can be applied and which is not connected on the compressed-air side to the first and the second heat-exchanger unit (12,14).

15. Air-conditioning system according to one of the preceding claims, **characterized in that** a cabin air circuit (100) is provided in which means are arranged for dissipation of heat from the circulating air.

16. Air-conditioning system according to Claim 15, **characterized in that** the means comprise a heat-exchanger.

17. Air-conditioning system according to Claim 15, **characterized in that** the means comprise an evaporator (110).

18. Air-conditioning system according to Claims 14 and 17, **characterized in that** the further heat-exchanger unit (16) which is arranged in the ram-air channel is in the form of a condenser and is connected to the evaporator (110), with the heat-exchanger unit (16) and the evaporator (110) being components of a coolant circuit.

19. Air-conditioning system according to one of the preceding claims, **characterized in that** one or more bypass lines (120,130) are provided, which extend from the outlet side of the heat-exchanger units (12,14) to the outlet side of the turbines (24,34) and can each be shut off by means of a valve (122,132) arranged in them.

20. Air-conditioning system according to one of the preceding claims, **characterized in that** the inlet side of the turbine (T) is connected via a line which can be closed by a valve (CSOV) to the cabin or to a mixing chamber connected upstream of it, and is connected on the outlet side via a line which can be closed by a valve (ASOV) to the environment, and **in that** means are provided by means of which the turbine (T) can be shut off from the lines which carry the air which has been compressed in the compressor (C).

21. Air-conditioning system according to Claim 20, **characterized in that** the means are in the form of valves (TSOV,CKV) which are arranged in the inlet line, which connects the turbine (T) to the water separation circuit, and in the outlet line, which connects the turbine (T) to the mixing chamber or the cabin.

22. Method for conditioning of air for air-conditioning of an area, in particular for air-conditioning of a passenger cabin of an aircraft, comprising the following steps:
- compression of ram-air or external air in a compressor unit (22,32) which is driven by means of a motor (26,36), and supply of the compressed air to a heat-exchanger (10),
- cooling of the air supplied to the heat-exchanger (10) by means of ram-air or external air,
- with the air which has been cooled in the heat-exchanger (10) being supplied, in a first operating mode, to a water separator (WE) and being expanded in an expansion stage (24,34),
- with the majority or all of the air which has been cooled in the heat-exchanger (10) being passed, in a second operating mode, in the bypass (120,130) around the water separator (WE) and the expansion stage (24,34),
- and with the motor power being used for cooling purposes and for forcing air to flow in the first operating mode, and the motor power being used for compression of the ram-air or external air in the second operating mode.

23. Method according to Claim 22, comprising the following steps:
compression of external air or ram-air in a first motor-driven compressor unit (22) and for supplying the compressed air to a first heat-exchanger unit (12) of a heat-exchanger (10);
compression of external air or ram-air in a second motor-driven compressor unit (32) and for supplying the compressed air to a second heat-exchanger unit (14), which is separated on the compressed-air side from the first heat-exchanger unit (12) of the heat-exchanger (10), and
cooling of the air supplied to the heat-exchanger units (12,14), by means of ram-air or external air;
with the air which has been cooled in the heat-exchanger units (12,14) being supplied, in a first operating mode, to a water separation circuit (70,80), being expanded in an expansion stage (24,34) and being passed to the area to be air-conditioned or to an upstream mixing chamber,
and with the air which has been cooled in the heat-exchanger units (12,14) being passed, in a second operating mode, directly to the area to be air-conditioned or to an upstream mixing chamber, bypassing the water separation circuit (70,80) and the expansion stage (24,34).

24. Method according to Claim 23, **characterized in that** the first operating mode of the method is used during ground operation of the aircraft and at low aircraft altitudes, and the second operating mode is used at altitudes higher than this.

25. Method according to Claim 23 or 24, **characterized in that** the cooling power for cooling of the air which is supplied to the heat-exchanger units (12,14) is controlled or regulated by ram-air or external air by varying the position of a ram-air channel inlet valve (43) and/or by varying the power of fans (50,52) which are arranged in the ram-air outlet channel (44).

26. Method according to one of Claims 23 to 25, **characterized in that** at least a portion of the air in the area concerned, in particular in the cabin air, is circulated and is cooled in the process.

27. Method according to Claim 26, **characterized in that** the cooling is carried out by means of a cooling medium which is circulated, and **in that** heat is extracted from the cooling medium in a heat-exchanger unit (16) which is arranged in the ram-air channel (40) of the air-conditioning system.

28. Method according to one of Claims 23 to 27, **characterized in that**, in the second operating mode, cabin outlet air is expanded in the turbine (T) and is then supplied to the external air.

29. Method according to one of Claims 22 to 28, with more than 50% of the available motor power being used for cooling purposes and for forcing air to flow in the first operating mode.

## Revendications

1. Système de climatisation, en particulier un système de climatisation pour la climatisation d'une cabine de passagers dans un avion, avec au moins un échangeur thermique (10), monté dans un conduit d'air dynamique (40), avec au moins un système d'arbre (20, 30), relié du côté air comprimé à l'échangeur thermique (10) et comportant au moins un compresseur (22, 32) alimenté en air dynamique ou air ambiant du côté admission et au moins une turbine (24, 34), avec au moins un moteur (26, 36) pour actionner le compresseur, avec un by-pass de contournement de turbine (120, 130) pour contourner la turbine du côté air comprimé, ainsi qu'avec au moins un dispositif de commande, au moyen duquel le système de climatisation peut être utilisé dans un premier mode de service, dans lequel l'air comprimé est détendu dans la turbine (24, 34), et peut être utilisé dans un deuxième mode de service, dans lequel la majeure partie ou la totalité de l'air comprimé est acheminée à travers le by-pass de contournement de turbine (120, 130), le dispositif de commande étant relié au moteur (26, 36) et étant réalisé de telle sorte que le moteur dans le premier mode de service est exploité de telle sorte que la puissance du moteur est utilisée à des fins de refroidissement et à des fins de pressurisation, et est exploité dans un deuxième mode de service de telle sorte que la puissance du moteur est utilisée pour la compression de l'air dynamique ou air ambiant,
**caractérisé en ce qu'**un déshydrateur (WE) est monté en aval de la turbine et le by-pass de contournement de turbine (120, 130) contourne du côté air comprimé tout autant le déshydrateur (WE) que la turbine.

2. Système de climatisation selon la revendication 1, **caractérisé en ce que** le dispositif de commande est réalisé de telle sorte que le premier mode de service est utilisé pour les déplacements au sol ou les faibles hauteurs de vol et le deuxième mode de service est utilisé par contre pour les hauteurs de vol plus élevées.

3. Système de climatisation selon l'une quelconque des revendications précédentes, avec au moins un échangeur thermique (10), monté dans un conduit d'air dynamique (40) et destiné à refroidir l'air comprimé, ainsi qu'avec au moins un premier et un deuxième système d'arbre (20, 30), l'échangeur thermique (10) comportant au moins une première unité d'échange thermique (12) et au moins une deuxième unité d'échange thermique (14) séparée de celle-ci du côté air comprimé, lesquelles sont montées dans un conduit d'air dynamique (40) commun et parmi lesquelles chacune est reliée du côté air comprimé à respectivement un des systèmes d'arbre (20, 30), les systèmes d'arbre (20, 30) comportant des compresseurs (22, 32) qui, du côté sortie, sont reliés à l'entrée du côté air comprimé des unités d'échange thermique (12, 14), les compresseurs (22, 32) du côté admission étant alimentés en air dynamique ou air ambiant, et il est prévu un ou plusieurs moteurs (26, 36) au moyen desquels les compresseurs (22, 32) peuvent être actionnés.

4. Système de climatisation selon la revendication 3, **caractérisé en ce que** les unités d'échange thermique (12, 14) forment une unité de construction.

5. Système de climatisation selon la revendication 3 ou 4, **caractérisé en ce qu'**il est prévu un conduit d'admission d'air dynamique (42) commun pour lesdites au moins deux unités d'échange thermique (12, 14).

6. Système de climatisation selon la revendication 5, **caractérisé en ce qu'**une vanne d'admission du conduit d'air dynamique (43) à position réglable est prévue dans le conduit d'air dynamique (40).

7. Système de climatisation selon l'une quelconque des revendications 3 à 6, **caractérisé en ce que** qu'il est prévu un conduit d'évacuation d'air dynamique (44) commun pour lesdites au moins deux unités d'échange thermique (12, 14).

8. Système de climatisation selon l'une quelconque des revendications 3 à 7, **caractérisé en ce qu'**un ou deux ventilateurs (50, 52) ou plus, actionnés par un moteur, sont prévus dans le conduit d'évacuation d'air dynamique (44).

9. Système de climatisation selon la revendication 8, **caractérisé en ce que** des clapets de non-retour (54, 56) sont prévus en aval des ventilateurs (50, 52).

10. Système de climatisation selon l'une quelconque des revendications précédentes, **caractérisé en ce qu'**il est prévu d'agencer dans le conduit d'évacuation d'air dynamique (44) un ou plusieurs by-pass de contournement de ventilateur (60), munis d'un ou de plusieurs clapets de non-retour (58).

11. Système de climatisation selon l'une quelconque des revendications précédentes, **caractérisé en ce que** les compresseurs (22, 32) sont des compresseurs à plusieurs étages, parmi lesquels le premier étage (22a, 32a) est alimenté en air dynamique ou air ambiant du côté admission et le dernier étage (22b, 32b) est relié du côté sortie à l'entrée du côté air comprimé des unités d'échange thermique (12, 14).

12. Système de climatisation selon l'une quelconque des revendications précédentes, **caractérisé en ce que** les systèmes d'arbre (20, 30) comportent au moins un compresseur (22, 32), une turbine (24, 34), ainsi qu'un moteur (26, 36).

13. Système de climatisation selon l'une quelconque des revendications précédentes, **caractérisé en ce que** chacun des systèmes d'arbre (20, 30) est relié à respectivement un circuit de déshydratation (70, 80).

14. Système de climatisation selon l'une quelconque des revendications précédentes, **caractérisé en ce que** l'échangeur thermique (10) comporte une unité d'échange thermique (16) supplémentaire, qui peut être alimentée en air dynamique ou air ambiant et qui ne communique ni avec la première unité d'échange thermique (12) ni avec la deuxième unité d'échange thermique (14) du côté air comprimé.

15. Système de climatisation selon l'une quelconque des revendications précédentes, **caractérisé en ce qu'**il est prévu circuit d'air de cabine (100), dans lequel sont agencés des moyens de dissipation de la chaleur hors de l'air guidé dans le circuit.

16. Système de climatisation selon la revendication 15, **caractérisé en ce que** lesdits moyens comportent un échangeur thermique.

17. Système de climatisation selon la revendication 15, **caractérisé en ce que** lesdits moyens comportent un évaporateur (110).

18. Système de climatisation selon les revendications 14 et 17, **caractérisé en ce que** l'unité d'échange thermique (16) supplémentaire, montée dans le conduit d'air dynamique, peut être réalisée sous forme de condenseur et être reliée à l'évaporateur (110), l'unité d'échange thermique (16) et l'évaporateur (110) étant des parties intégrantes d'un circuit de fluide de refroidissement.

19. Système de climatisation selon l'une quelconque des revendications précédentes, **caractérisé en ce qu'**il est prévu un ou plusieurs by-pass (120, 130) qui mènent depuis le côté sortie des unités d'échange thermique (12, 14) vers le côté sortie des turbines (24, 34) et qui peuvent être fermés chacun au moyen d'une vanne (122, 132) montée dans ledit by-pass.

20. Système de climatisation selon l'une quelconque des revendications précédentes, **caractérisé en ce que** la turbine (T) du côté admission est reliée à la cabine via une conduite apte à être fermée par une vanne (CSOV) ou à un caisson de mélange monté en amont de la cabine, et est reliée du côté sortie à l'environnement via une conduite apte à être fermée par une vanne (ASOV), et **en ce que** des moyens sont prévus pour fermer la turbine (T) par rapport aux conduites guidant l'air comprimé vers le compresseur (C).

21. Système de climatisation selon la revendication 20, **caractérisé en ce que** lesdits moyens sont réalisés sous forme de vannes (TSOV, CKV), qui sont montées dans la conduite d'admission reliant la turbine (T) au circuit de déshydratation, ainsi que dans la conduite d'évacuation reliant la turbine (T) au caisson de mélange ou à la cabine.

22. Procédé de conditionnement de l'air pour la climatisation d'un espace, en particulier pour la climatisation d'une cabine de passagers dans un avion, comportant les étapes suivantes:
- compression de l'air ambiant ou air dynamique dans un compresseur (22, 32), actionné par un moteur (26, 36), et acheminement de l'air comprimé vers un échangeur thermique (10);
- refroidissement de l'air acheminé vers l'échangeur thermique (10) au moyen de l'air dynamique ou air ambiant;
- sachant que dans un premier mode de service, l'air refroidi dans l'échangeur thermique (10) est acheminé vers un déshydrateur (WE) et est détendu dans un étage de détente (24, 34),
- sachant que dans un deuxième mode de service, l'air refroidi dans l'échangeur thermique (10) est guidé en majeure partie ou totalement dans le by-pass (120, 130) autour du déshydrateur (WE) et de l'étage de détente (24, 34),
- et sachant que, dans le premier mode de service, la puissance du moteur est utilisée à des fins de refroidissement et à des fins de pressurisation et, dans le deuxième mode de service, la puissance du moteur est utilisée pour la compression de l'air dynamique ou air ambiant.

23. Procédé selon la revendication 22, comportant les étapes suivantes:
- compression de l'air ambiant ou air dynamique dans un premier compresseur (22) actionné par moteur, et acheminement de l'air comprimé dans une première unité d'échange thermique (12) d'un échangeur thermique (10);
- compression de l'air ambiant ou air dynamique dans un deuxième compresseur (32) actionné par moteur, et acheminement de l'air comprimé dans une deuxième unité d'échange thermique (14) de l'échangeur thermique (10), séparée du côté air comprimé de la première unité d'échange thermique (12), et
- refroidissement de l'air acheminé vers les unités d'échange thermique (12, 14) par l'air dynamique ou air ambiant;
- sachant que dans un premier mode de service, l'air refroidi dans les unités d'échange thermique (12, 14) est acheminé vers un circuit de déshydratation (70, 80), est détendu dans un étage de détente (24, 34) et est acheminé dans l'espace à climatiser ou dans un caisson de mélange monté en amont de celui-ci,
- et sachant que dans un deuxième mode de service, l'air refroidi dans les unités d'échange thermique (12, 14) est acheminé, en contournant le circuit de déshydratation (70, 80) et l'étage de détente (24, 34), directement dans l'espace à climatiser ou dans un caisson de mélange monté en amont de celui-ci.

24. Procédé selon la revendication 23, **caractérisé en ce que** le premier mode de service du procédé est utilisé en cas de déplacement au sol de l'avion et à de faibles hauteurs de vol de l'avion et le deuxième mode de service est utilisé par contre pour les hauteurs de vol plus élevées.

25. Procédé selon la revendication 23 ou 24, **caractérisé en ce que** la puissance frigorifique pour le refroidissement de l'air acheminé vers les unités d'échange thermique (12, 14) au moyen d'air dynamique ou air ambiant, peut être commandée ou régulée par la variation de la position d'une vanne d'admission (43) du conduit d'air dynamique et/ou par la variation de la puissance des ventilateurs (50, 52) montés dans le conduit d'évacuation d'air dynamique (44).

26. Procédé selon l'une quelconque des revendications 23 à 25, **caractérisé en ce que** l'air environnant, en particulier l'air de la cabine, est guidé au moins en partie dans le circuit et est refroidi à cette occasion.

27. Procédé selon la revendication 26, **caractérisé en ce que** le refroidissement est effectué au moyen d'un fluide de refroidissement, qui circule dans le circuit, et **en ce que** la chaleur contenue dans le fluide de refroidissement est prélevée dans une unité d'échange thermique (16) montée dans le conduit d'air dynamique (40) du système de climatisation.

28. Procédé selon l'une quelconque des revendications 23 à 27, **caractérisé en ce que**, dans le deuxième mode de service, l'air pollué de la cabine est détendu dans la turbine (T) et est acheminé ensuite vers l'air ambiant.

29. Procédé selon l'une quelconque des revendications 22 à 28, dans lequel, dans le premier mode de service, plus de 50 % de la puissance disponible du moteur est utilisée à des fins de refroidissement, ainsi qu'à des fins de pressurisation.
